# EUROPEAN PATENT APPLICATION

(11) **EP 2 106 169 A1**
(43) Date of publication of application: **30.09.2009**
(21) Application number: 09154778.6
(22) Date of filing: 10.03.2009
(51) Int. Cl.: H04W 12/00, H04L 29/06

(54) **A cryptographic communication terminal**

(30) Priority: 25.03.2008 GB 0805246
(71) Applicant: Selex Communications Limited, Chelmsford, Essex CM1 1PL (GB)
(72) Inventor: Kitchin, Michael, Ormskirk, Merseyside LE39 5DE (GB); Williams, Martin, New Ferry, Merseyside CH26 1EA (GB)
(74) Representative: Tolfree, Roger

(57) **Abstract**

Where a high degree of security is required in a long-range communication link it is conventional to use a cryptographic algorithm in combination with a key to encrypt and decrypt communications. This gives a high level of security but is expensive to implement. There is a demand for communication systems that include two or more separate units e.g. a mobile radio held on the body and a separate headset, to include a short range wireless communication link for local communication between the units of the same system. The use of short range wireless links compromises security because they do not normally include an encryption facility. This is overcome by deriving a recorded list of random-like digits (one time pad), e.g. by feeding naturally or artificially produced noise into a cryptographic algorithm and storing the resulting encrypted digits in a memory, coping the one time pad onto each of the separate units of the system and using the one time pad for the encryption of data carried by the short range wireless link.

## Description

This invention relates to a terminal connected to transmit and/or receive encrypted information on a relatively long-range communication link and also having a short range wireless link operating between units of the terminal. The terminal may be a radio transceiver, whose primary function is to provide the long range communication facility for voice, video or data signals; or it may have some other primary function. For example, it may be a computer or a local network of computers.

Where a high degree of security is required in the long-range communication link, it is conventional to use a cryptographic algorithm in combination with a key (known to all systems connected by the link) to encrypt and decrypt communications. This technique can give a high degree of security but the systems required to achieve this are expensive to implement.

There is an increasing demand for systems that include two or more separate units to include a short range wireless communication link for local communication between the units of the same system. For example, where the system is a mobile radio set it is convenient for the main electronic system to be enclosed in a housing held on the body of the user, with a separate headset connected wirelessly to it. Where the system is a computer it is often convenient for ancillary devices such as keyboard, microphone, headset, scanner, printers, display units and other input/output devices to be connected by a short range wireless link. Likewise, two or more computer units in the same local system may be connected by a short range wireless communication network. This increasing use of short range wireless links avoids the need for trailing wires but compromises security because short range wireless links do not normally include an encryption facility.

The obvious solution to this problem would be to encrypt the short range system in the same way (and to the same level of security) as the main long-range communication link. However, in most situations, the high cost of this is unlikely to be justified by the benefit over a wired system. It would also introduce a security hazard because, if any one device (e.g. a headset of a mobile radio system) containing the algorithm and/or key were lost, the security of the entire network would be compromised.

This invention allows the aforementioned problems to be overcome.

According to the invention there is provided an electronic system adapted to be connected to a relatively long-range communication link, the system comprising a first unit containing a cryptographic device employing an algorithm to encrypt or decrypt messages transmitted on the long-range link and at least one second device connected by a relatively short-range wireless link to the first unit *characterised by* means for deriving a one-time pad from the cryptographic device, means for storing the one-time pad in the first and second units and means for using the one-time pad for the encryption of data carried by the short range link.

A one-time pad is a recorded list of random-like digits that is shared by both ends of a communication link. In use, the digits are combined, usually in an exclusive OR gate, with the data to be encrypted or decrypted. The principle is described for example in the book "Applied Cryptography" by Bruce Schneier published in 1994 by John Wiley & Sons Inc (ISBN 0-471-59756-2). A one-time pad is known to be capable of giving a very high degree of security providing that the pad itself is highly random. Because the invention employs the cryptographic facility of the long-range communication link, it now becomes possible for the "first unit" to generate a highly secure one-time pad for use in short range communications e.g. with ancillaries.

Generation of the one-time pad can be initiated by operating a switch (e.g. automatically on start up or manually when required by the operator) to feed naturally or artificially produced noise into the cryptographic algorithm and storing the resulting encrypted digits in a memory. This can then be copied between units of the system defining the terminal. Copying may be achieved in a secure manner using a temporary wire connection or by employing removable memory devices which can be temporarily loaded into the first unit for re-charging with a new pad.

The use of a one-time pad to provide encryption in a short range wireless link is considered to have independent inventive significance and therefore, according to a second aspect of this invention, there is provided an electronic system comprising a first unit and at least one second unit connected by a relatively short-range wireless link to the first unit characterised by means in both units for storing a one-time pad and means for using the one-time pad for the encryption and decryption of data carried by the short range link.

As before some facility is preferably included for transferring the one time pad between units e.g. using a wire or removable plug-in memory unit. The one-time pad, in this aspect of the invention, need not necessarily be derived using a complex cryptographic algorithmic device. Instead it may be produced by an internal or external source of random data such as would be provided by a quantum noise generator or by an alternative high quality random data source. The output of a pseudo-random generator would not be ideal because its output has a defined pattern.

Two ways in which the invention may be employed will now be described by way of example with reference to the accompanying schematic drawings in which: -
**Fig 1** shows a two of many mobile radio sets each forming a terminal on a long range communication network operating in accordance with the Tetra standard; and
**Fig 2** shows another mobile radio set forming a third terminal on the same long range communication system.

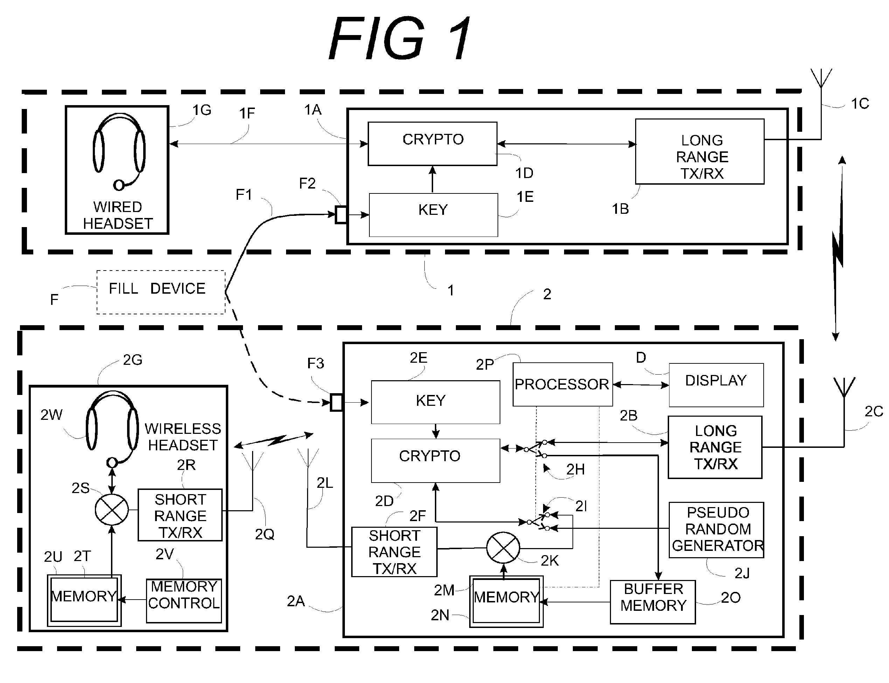

Referring first to Fig 1, a first radio set 1 comprises an electronics unit 1A containing: a relatively long range wireless transceiver 1B of conventional construction; an antenna 1C; a cryptographic device 1D programmed to define a cryptographic algorithm; and, associated with the device 1D, a storage facility 1E for a relatively short encryption key. The key held in store 1D is common to all radio sets in the network and is derived from a common source, illustrated in the drawing by a fill device F held by a trusted supervisor. From time to time this key is changed in all the radio sets of the network by connecting them temporarily to the fill gun using a wired connector F1 and sockets F2 and F3.

The radio unit 1A is connected by a wire 1F to a conventional headset 1G. The described components of the radio set 1 are of conventional construction and the cryptographic algorithm employs conventional principles as described in the aforementioned book by Bruce Schneier.

The radio set 2 has a first, main unit 2A, containing a long range wireless transceiver 2B, antenna 2C, cryptographic device 2D and store 2E identical to respective parts of the radio set 1. It also has a short range wireless transceiver 2F by which it communicates with a second, ancillary, unit in the form of a wireless headset 2G. In this particular embodiment the short range link uses a protocol known by the trade mark Bluetooth of Bluetooth SIG, Inc. and has a short range of up to about 10 metres.

Incorporated into the main unit 2A are ganged switches 2H and 2I, a pseudo-random code generator 2J, a mixer 2K formed by an exclusive OR gate, an antenna 2L for the short range transceiver 2F, and a one-time pad memory 2M formed by a removable memory card held in a socket 2N.

Incorporated into the wireless headset 2G is a mixer 2S formed by an exclusive OR gate, a memory 2T identical to the memory 2M and removably held in a socket 2U.

Assuming both radio sets are switched on, a voice message from the microphone of headset 1 G is encrypted at 1D and then transmitted by the transceiver 1B and antenna 1C. The encrypted signal is received by antenna 2C and transceiver 2B and is passed via switch 2H to unit 2D where it is decrypted using the same algorithm and key as is used at 1D and 1E. The decrypted voice signal cannot securely be transmitted wirelessly to the headset 2G and to solve this problem it is mixed, under the control of a processing mechanism 2P and an exclusive OR gate 2K with digits from the one-time pad held in memory 2M. The resulting encrypted signal is transmitted via the Bluetooth transceiver 2F and antenna 2L to the headset 2G where it is received by another Bluetooth transceiver 2R and mixed in exclusive OR gate 2S, under the control of a control mechanism 2V, with a one-time pad held on removable card 2T in socket 2U. This one-time pad is identical to that stored at 2M and serves to decrypt the message before it is fed to the earphones of the headset.

After each encryption and decryption of the message transmitted over the short range link, the used digits of the one-time pad are deleted, under the control of the processing mechanisms 2P and 2V. A similar deletion facility is included in the headset but is not shown in the schematic drawing. Deletion of used digits is desirable because they could, if lost, be used for illicit decryption of recorded past messages.

Messages in the reverse direction from the microphone at 2W to the earphones at 1G are processed in an exactly analogous fashion.

Each time the unit 2A is powered up, the processor 2P switches the ganged switches 2H and 2I to their lower positions as illustrated in the drawing, causing a pseudo random sequence of digits to be applied from 2J to the cryptographic algorithm held at 2D. This produces a highly random-like sequence of digits which are loaded into the buffer 20 and thence to removable memory 2M. The user is then prompted, via a user interface including display D, physically to remove the memory card 2M and to replace it with memory card 2T' from the headset. On doing this, the same pseudo random digits are loaded from the buffer 20 into the memory 2T. The latter is then returned to the socket 2U in the headset and the memory 2M is replaced in its socket 2N. The processor 2P then returns the switches 2H to their original position so that the system is ready for use.

The one-time pad method of encrypting the information transmitted over the short range link between transceivers 2F and 2R is highly secure, having used the highly sophisticated encryption algorithm built into the mechanism 2C to generate the digits used for encryption. However, if the headset 2G is lost, there is no threat to security because the one-time pad that it contains is used only by the holder of a single radio set 2, who can obtain a spare headset and then reset the one-time pad. The security of other radios having short range wireless accessories is not compromised.

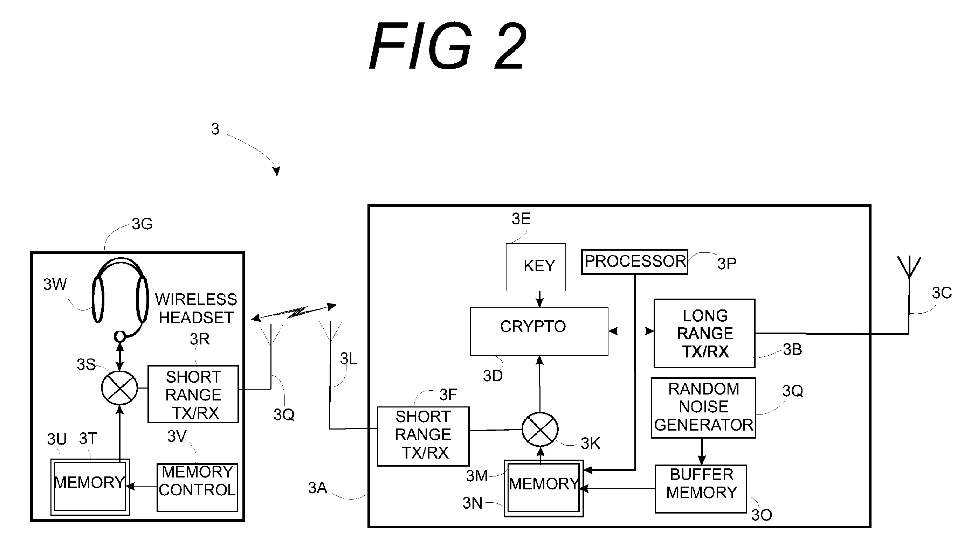

The third mobile radio set indicated generally by the arrow 3 on Fig 2 has many parts that provide an equivalent function to those of the radio set 2 and these parts are given the same suffix letters as the equivalent parts of Fig 1. This mobile radio set 3 differs from the set 2 in that the one-time pad held in the buffer 20 is derived from a quantum noise generator 3X. There is therefore no need for the pseudo-random generator and switches as used in the radio set 2. In other respects operation of the radio set 3 is analogous to that of set 2.

It will be appreciated that the illustrated system has been described only by way of example and that many variations of this are possible within the scope of the invention as defined by the appended Claims. For example, in the illustrated system it is envisaged that each electronics unit 1A, 2A, 3A will be carried on the body of a user, e.g. on a waistband, whilst the headset 1G, 2G, 3G will of course be carried on the user's head. However, in alternative systems the units 1A, 2A, 3A could be fixed, or vehicle mounted, whilst the wireless headset could be replaced for example by any hand-held or other unit that is always located close to its associated main unit or another fixed unit. In the radio set 3, the Quantum noise generator may be omitted with its function being provided by a separate noise generator that may be used by multiple radios.

In another variant, instead of resetting the one-time pad automatically on start-up, this can be done by manual operation of a switch by the operator whenever required.

In another variant, some or all of the radio sets as described are replaced by other communications terminals such as computers or computer controlled systems, interconnected by a long range network connection.

In another variant, the long range wireless connection can be replaced by a wire, optical cable or internet connection.

In yet another variant, the headphone/microphone set 2W can be replaced by any other accessory that requires a short range wireless connection to the unit 2A. Typical examples include data input devices such as a video camera (e.g. helmet mounted), a keyboard or a scanner.

Finally, it is observed that, in an alternative arrangement the headphone/microphone set 2W could be replaced by a computer; and a number of similar computer units 2G could then be wirelessly connected to the long range link via the unit 2A. The latter would then provide the function of a wireless router.

### Definitions:

The following definitions apply to terms used in this specification:
*"Short"* in relation to the range of a communications link between a terminal and ancillary is defined as meaning that it is shorter than the range of a link between terminals.
*"Long"* in relation to the range of a communication link between terminals is defined as meaning longer than the range of a wireless link between a terminal and an ancillary
*"Wireless"* is defines as meaning without a physical link such as a wire or a cable; and embraces links that use electromagnetic waves such as radio, light, infrared and microwave; and other waves such as, sound and ultrasonic waves.
"*Ancillary*", when used in relation to a device, means that the device is associated with a terminal having a long range link; and does not imply that the ancillary device is smaller or of lesser importance than that terminal.
"*Communication terminal*" means any unit that is adapted to communicate with other units, and is not restricted to units whose primary purpose is a communication function.
"*one-time pad*" is a recorded list of random-like digits or numbers that are used once to combine with the data to be encrypted or decrypted.

## Claims

1. An electronic system adapted to be connected to a relatively long-range communication link, the system comprising a first unit containing a cryptographic device employing an algorithm to encrypt or decrypt messages transmitted on the long-range link and at least one second device connected by a relatively short-range wireless link to the first unit ***characterised by*** means for deriving a one-time pad from the cryptographic device, means for storing the one-time pad in the first and second units and means for using the one-time pad for the encryption of data carried by the short range link.

2. An electronic system according to Claim 1 ***characterised in that*** the means for deriving the one-time pad comprises a switch for passing an output of the cryptographic device to a store in the first unit.

3. An electronic system according to Claim 2 ***characterised by*** means for copying the one-time pad into a store in the or each second unit.

4. An electronic system according to any preceding Claim ***characterised in that*** the means for deriving the one-time pad comprises a pseudo random code generator arranged to feed a pseudo random code to an input of the cryptographic device.

5. An electronic system according to any preceding Claim ***characterised in that*** the cryptographic device comprises means for storing a cryptographic algorithm, means for storing a key and means for causing the algorithm to interact with the key and input data so as to encrypt or decrypt the data.

6. An electronic system according to any preceding Claim ***characterised in that*** the short range link is a radio link capable of operating over a maximum range of about 10 metres.

7. A network of electronic systems according to any preceding Claim interconnected by a long range communications link.

8. An electronic system comprising a first unit and at least one second unit connected by a relatively short-range wireless link to the first unit ***characterised by*** means in both units for storing a one-time pad and means for using the one-time pad for the encryption and decryption of data carried by the short range link.

9. An electronic system according to Claim 8 ***characterised by*** means for transferring the one time pad between units.

10. An electronic system according to Claim 9 ***characterised by*** means in the first unit for generating the one-time pad.

11. An electronic system according to Claim 8. 9 or 10 ***characterised in that*** the means for generating the one-time pad is a noise source.

12. An electronic system according to Claim 11 ***characterised in that*** the means for generating the one-time pad is a quantum noise generator.

13. A mobile or portable radio set according any one of Claims 8 to 12 ***characterised in that*** the second unit is a headset.
